# EUROPÄISCHE PATENTSCHRIFT

(11) **EP 2 983 030 B1**
(45) Veröffentlichungstag und Bekanntmachung des Hinweises auf die Patenterteilung: **03.11.2021**
(21) Anmeldenummer: 15178359.4
(22) Anmeldetag: 24.07.2015
(51) Int. Cl.: G02B 27/00, G02B 26/10, G02B 26/12, G06K 7/10

(54) **MEHREBENENSCANNER UND VERFAHREN ZUM ERFASSEN VON OBJEKTEN**
MULTI-LEVEL SCANNER AND METHOD FOR RECORDING OBJECTS
SCANNER MULTINIVEAUX ET PROCEDE DESTINE A LA SAISIE D'OBJETS

(30) Priorität: 05.08.2014 DE 102014111138
(43) Veröffentlichungstag der Anmeldung: 10.02.2016
(73) Patentinhaber: SICK AG, 79183 Waldkirch (DE)
(72) Erfinder: Nübling, Ralf Ulrich, 79211 Denzlingen (DE); Jägel, Matthias, 79104 Freiburg (DE); Schmalfuß, Moritz, 79199 Kirchzarten (DE); Hanselmann, Gabriel, 79369 Whyl (DE)

(56) Entgegenhaltungen:
- EP-A2- 0 783 126
- EP-A2- 1 965 225
- DE-A1- 3 602 008
- US-A- 4 268 110
- US-A- 5 278 405
- US-A- 5 757 501
- US-A1- 2013 076 852
- US-A1- 2014 166 866

## Beschreibung

Die Erfindung betrifft einen Mehrebenenscanner und ein Verfahren zum Erfassen von Objekten in einem Überwachungsbereich mit mehreren übereinanderliegenden Ebenen nach dem Oberbegriff von Anspruch 1 beziehungsweise 7.

Scanner werden für vielfältige Überwachungs- und Vermessungsaufgaben verwendet. Dazu tastet ein Abtast- oder Scanstrahl einen Bereich ab und wertet das reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Bekannte Laserscanner weisen einen Drehspiegel oder ein Polygonrad auf, um periodisch eine Überwachungsebene oder ein Segment einer zweidimensionalen Überwachungsebene abzutasten. In vielen Anwendungen besteht aber der Wunsch, das Umfeld nicht nur in einer einzigen Ebene zu erfassen. Dies gilt insbesondere in mobilen Anwendungen, etwa bei führerlosen Fahrzeugen (AGV, Automated Guided Vehicle), wo die Anforderung besteht, den Boden mit Kanten und Absätzen ebenso zu erkennen wie Objekte, die in unterschiedlichen Höhen in den Fahrbereich ragen. Eine andere Anwendung ist die Überwachung und Klassifizierung von Fahrzeugen, beispielsweise an Autobahnen oder an automatischen Erfassungspunkten.

Der Stand der Technik kennt dreidimensionale Scanner, in denen der Sensor als Ganzes oder der Drehspiegel zusätzlich periodisch verkippt wird. Das erfordert aber jeweils sehr aufwändige Konstruktionen. Oftmals genügt es, wenn nicht ein ganzer Raumbereich, sondern nur einige übereinander geschichtete Ebenen überwacht werden können.

Eine Möglichkeit, eine derartige Mehrebenenabtastung zu erreichen, besteht darin, statt eines einfachen Polygonrads Rasterspiegelräder mit unterschiedlich geneigten Facetten als Ablenkeinheit zu verwenden. Durch die Verwendung eines Polygonrads verringert sich zwar der Scanwinkelbereich auf typischerweise weniger als 100°, aber dafür wird durch die geneigten Facetten je Umdrehung der Überwachungsbereich mehrfach in unterschiedlichen Höhen abgetastet.

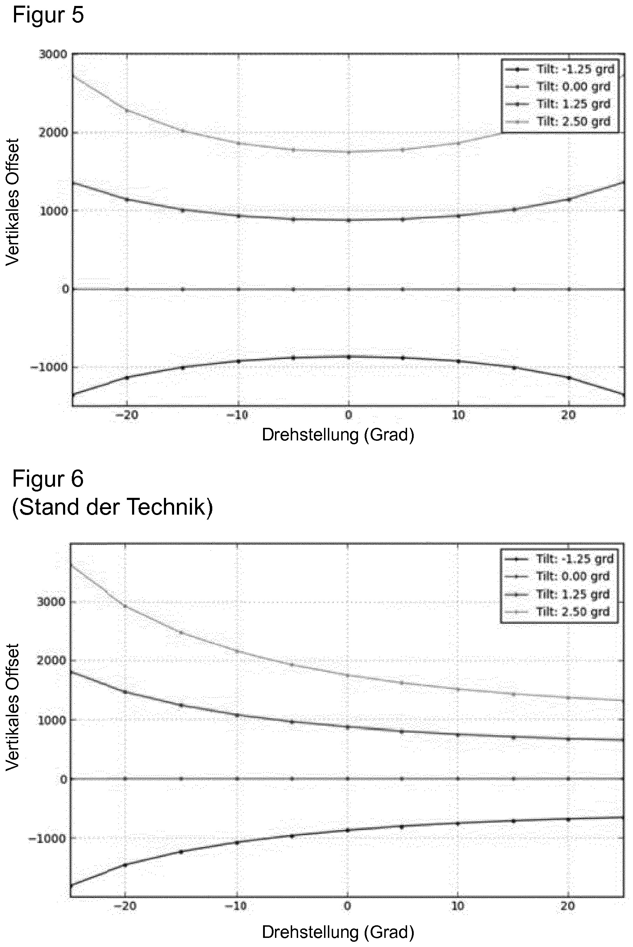

Allerdings haben solche Rasterspiegelräder den Nachteil, dass durch den unterschiedlichen Einfallswinkel des Abtaststrahls auf die Facetten im Verlauf der Drehbewegung die Abtastebenen verzerrt werden, sofern ein Feed-Winkel größer als 0° (also nicht direkt von vorne kommend) gewählt wird, was fast immer der Fall ist. Dies ist in Figur 6 illustriert, in der für mehrere Ebenen ein vertikales Offset über den Drehwinkel des Rasterspiegelrads aufgetragen ist. Anders ausgedrückt sind die Scanlinien auf einer ebenen Wand gezeigt, die von mehreren unterschiedlich geneigten Facetten erzeugt werden.

Wie in Figur 6 zu erkennen, ist nur die mittlere Linie einer Facette ohne Verkippung eine Gerade. Es ist nun nicht problematisch, dass die anderen Linien gekrümmt sind. Das liegt daran, dass ein Mehrebenenscanner genaugenommen keine mehreren Ebenen, sondern Kegelmantelflächen erfasst. Deshalb sind radial die auf eine ebene Wand projizierten Scanlinien zu geneigten Facetten gekrümmt. Soweit ist der Unterschied zu einer Ebene nicht allzu relevant, weil aufgrund der kleinen Kippwinkel der Kegelwinkel sehr groß ist.

Störend ist vielmehr die Tatsache, dass die Scanlinien zu der Mittellinie bei Drehstellung 0° asymmetrisch sind. Die vertikale Winkelauflösung bei positiven Drehstellungen ist deshalb besser als bei negativen Drehstellungen, und damit sind zu einer Facette gehörige Erfassungsbereiche auch in polarer Betrachtung auf einem Kegelmantel nicht mehr eben. Das vertikale Auflösungsvermögen hängt in unerwünschter Weise von der Winkelstellung des Rasterspiegelrads ab.

In den bekannten Geräten spielt dieser Effekt deshalb praktisch keine Rolle, weil sie zum Abtasten von Barcodes genutzt werden, da nur ein kleiner Winkelbereich erfasst wird und im Übrigen auch eine verzerrte Scanlinie meist noch das Lesen des Codes erlaubt und dies jedenfalls kaum davon abhängt, ob die Scanlinie symmetrisch gekrümmt ist oder nicht. Bei einer Überwachung in den oben genannten Beispielanwendungen kommt der Verzerrungseffekt dann aber zum Tragen.

Die DE 36 02 008 A1 offenbart eine optische Abtastvorrichtung mit einem Spiegelrad. Die Facetten dieses Spiegelrads sind unterschiedlich gekrümmt. Als konkretes Beispiel wird ein Spiegelrad mit sechs Spiegelflächen angegeben, wobei je ein Paar diametral gegenüberliegender Spiegelflächen eben, konkav und konvex ausgebildet ist. Die Abtastvorrichtung umfasst eine Auswerteelektronik, welche auf die Schärfe des Empfangslichtflecks anspricht und nur das vom schärfsten Abtastlichtfleck kommende Signal auswertet.

Die US 2013/0076852 A1 befasst sich mit einem Scansystem, welches mit einem Scanstrahl parallele Scanlinien auf einer Bildebene erzeugt. Dazu ist ein Rasterpolygonspiegel vorgesehen, dessen Spiegelflächen jeweils einen unterschiedlichen Kippwinkel aufweisen. Zum Ausgleich von Krümmungen der von den Spiegelflächen erzeugten Scanlinien wird ein Linsensystem aus im konkreten Beispiel fünf Einzellinsen eingesetzt, welches die Verzerrungen kompensiert.

Die EP 1 965 225 A2 offenbart diverse Varianten, den Drehspiegel eines Laserscanners zusätzlich zu verkippen, um die Scanebene zu variieren und dadurch den Sichtbereich zu vergrößern. US5278405A offenbart ein Scanner in dem eine Lichtquelle synchronisiert mit der Drehbewegung eines Polygonspiegelrads verschoben wird.

Daher ist Aufgabe der Erfindung, die Überwachung mit einem Mehrebenenscanner zu verbessern.

Diese Aufgabe wird durch einen Mehrebenenscanner und ein Verfahren zum Erfassen von Objekten in einem Überwachungsbereich mit mehreren übereinanderliegenden Ebenen nach Anspruch 1 beziehungsweise 7 gelöst.

Die Erfindung hat den Vorteil, dass ein Mehrebenen- oder Mehrlagenscanner mit konstanten Winkeloffsets geschaffen werden kann. Die zusätzlichen Ebenen haben also in polarer Betrachtung eine von der Drehstellung unabhängige konstante Abweichung zur mittleren Ebene. Das bedeutet nichts anderes, als dass die Winkelauflösung auch für einen Mehrebenenscanner der gattungsgemäßen einfachen Bauart insbesondere mit Polygonspiegelrad in Azimut wie Elevation konstant gehalten werden kann. Dabei muss keine vollständige Kompensation erzielt werden, da auch bereits eine Verringerung der Asymmetrie den Mehrebenenscanner verbessert.

Die Spiegelfacetten sind vorzugsweise als Freiformflächen mit ausgleichender Kontur ausgebildet. Relevant ist dabei die Linie, die der abtastende Lichtstrahl während der Rotation auf der Spiegelfläche beschreibt. Diese Linie bleibt nicht mehr in einer Ebene, sobald die Spiegelfacette in einer Dimension verändert wird, so dass die Freiformfläche vorzugsweise in beiden Dimensionen Modifikationen gegenüber einer ebenen Fläche aufweist. Wie im allgemeinen Fall ist auch die Freiformfläche gerade so auszubilden, dass in allen Drehstellungen der Spiegeleinheit für einen gleichen Ablenkwinkel gesorgt wird. Die Geometrie der Freiformfläche lässt sich nicht allgemein angeben, aber aufgrund dieser Forderung relativ einfach in Simulationen finden, wenn die relevanten Parameter wie Spotdurchmesser, Brennweiten der beteiligten Optiken und interne Abstände der Elemente im Strahlengang bekannt sind. Die Korrektur könnte z.B. nach einer 1/cos(Motorwinkel + ½ Feedwinkel) Abhängigkeit erfolgen.

Eine Frontscheibe des Mehrebenenscanners weist mehrere den Ebenen entsprechende übereinander liegende Segmente mit ausgleichender Kontur auf. Der Lichtstrahl tritt je nach Neigung der gerade in die aktive Position gedrehten Spiegelfacette in unterschiedlicher Höhe durch die Frontscheibe. Deshalb wird in der Frontscheibe jeder Spiegelfacette und damit überwachten Ebene ein Segment der Frontscheibe zugeordnet. Damit kann die Frontscheibe mehrfach für jede Spiegelfacette individuell gestaltet werden. Eine besonders bevorzugte Möglichkeit besteht darin, als Segmente Prismen mit unterschiedlichen Prismenwinkeln zu verwenden.

Die Spiegelfacetten weisen bevorzugt ein Verkippungselement auf, um mit der Drehbewegung der Spiegeleinheit synchronisiert verkippt zu werden. Nach den beiden statischen Lösungen der vorigen Absätze ist dies eine erste Ausführungsform mit dynamischer Kompensation. Die Neigung der Spiegelfacetten wird hier dynamisch verändert, während der Lichtstrahl sie überstreicht, um dem Lichtstrahl jeweils mit einem konstanten Ablenkwinkel zu reflektieren.

Vorteilhafterweise ist ein Verschiebungselement vorgesehen, um den Lichtsender gegenüber einer dem Lichtsender vorgeordneten Sendeoptik mit der Drehbewegung der Spiegeleinheit synchronisiert zu verschieben. Es kommt hier auf den relativen Versatz zwischen Lichtsender und Sendeoptik an, um die effektive Abstrahlrichtung des Lichtstrahls nach Transmission durch die Sendeoptik zu verändern. Dazu können wahlweise nur der Lichtsender, nur die Sendeoptik oder sowohl Lichtsender als auch Sendeoptik verschoben werden. Der durch die synchrone Verschiebung veränderte Einstrahlwinkel ist an die jeweilige Orientierung der Spiegelfacette in der Drehbewegung der Spiegeleinheit angepasst, um einen konstanten Ablenkwinkel zu erreichen

Gemäß der Erfindung ist ein Verschiebungselement vorgesehen, um den Lichtempfänger gegenüber einer dem Lichtempfänger vorgeordneten Empfangsoptik mit der Drehbewegung der Spiegeleinheit synchronisiert zu verschieben. Dies folgt einem ganz ähnlichen Gedanken wie die Ausführungsform mit Verschiebungselement, wobei hier zusätzlich oder stattdessen der rückkehrende Lichtstrahl im Empfangspfad anstelle des ausgesandten Lichtstrahls im Sendepfad beeinflusst wird.

Das Verkippungselement oder das Verschiebungselement weist bevorzugt einen Elektromagnet, ein Piezoelement oder eine Kurvenscheibe auf. Mit einer solchen Aktorik können die jeweils synchron zu bewegenden optischen Elemente durch elektrische Ansteuerung oder schon durch ihre mechanische Kopplung beeinflusst werden.

Eine Frontscheibe des Mehrebenenscanners weist bevorzugt eine konkave Krümmung auf. Die Krümmung bezieht sich auf die horizontale Richtung, also die Kontur, welche der Lichtstrahl überstreicht. Eine konkave Krümmung der Frontscheibe allein kompensiert noch nicht die Asymmetrie, weitet aber den überwachten Winkelbereich auf. Das wiederum bedeutet, dass im Vergleich zu einer flachen Frontscheibe eine kleinere Spiegelfacette zur Abdeckung eines gewünschten Winkelbereichs ausreicht und damit der verzerrende Effekt der Asymmetrie sich weniger stark auswirkt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die einzige Abbildung der Zeichnung zeigt in:
- Fig. 1: eine Blockdarstellung eines Mehrebenenscanners;
- Fig. 2: eine Teilansicht eines Polygonspiegelrades eines Mehrebenenscanners;
- Fig. 3: eine Frontalansicht einer Frontscheibe eines Mehrebenenscanners;
- Fig. 4: eine Teilansicht eines Polygonspiegelrads und einer Frontscheibe eines Mehrebenenscanners die nicht unter die Ansprüche fallen;
- Fig. 5: ein erfindungsgemäß symmetrisierter Verlauf des vertikalen Offsets in Abhängigkeit des Drehwinkels; und
- Fig. 6: zum Vergleich ein asymmetrischer Verlauf des vertikalen Offsets in Abhängigkeit des Drehwinkels bei einem herkömmlichen Mehrebenenscanner.

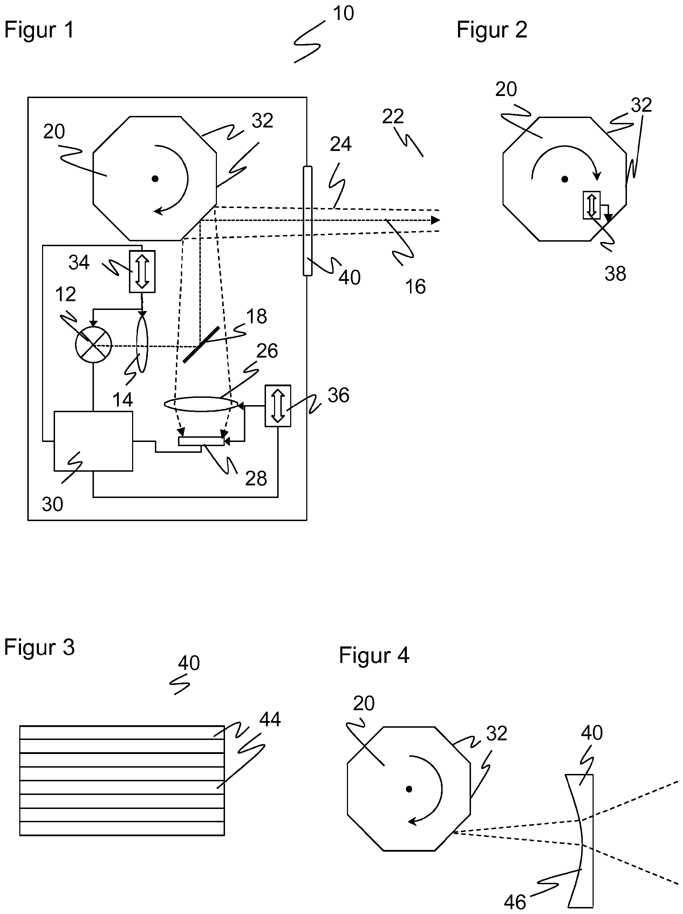

Figur 1 zeigt eine Blockdarstellung eines Mehrebenenscanners 10. Ein Lichtsender 12, beispielsweise eine Laserdiode oder eine LED, erzeugt mit Hilfe einer Sendeoptik 14 einen Lichtstrahl 16, der ein erstes Mal über ein fixes Ablenkelement 18 und ein zweites Mal über ein rotierendes Polygonspiegelrad 20 umgelenkt und dann in einen Überwachungsbereich 22 ausgesandt wird.

Trifft der Lichtstrahl 16 in dem Überwachungsbereich 22 auf ein Objekt, so kehrt ein reflektierter Lichtstrahl 24 zu dem Mehrebenenscanner zurück, wird erneut an dem Polygonspiegelrad 20 umgelenkt und trifft dann über eine Empfangsoptik 26 auf einen Lichtempfänger 28. Dabei wird hier sprachlich nicht zwischen Reflexion und der wesentlich häufiger auftretenden diffusen Remission an dem Objekt unterschieden. Das fixe Ablenkelement 18 ist entweder als Strahlteiler ausgebildet oder so klein, dass nur ein vernachlässigbarer Teil der Empfangsoptik 26 abgeschattet wird, so dass der reflektierte Lichtstrahl 24 das fixe Ablenkelement 18 passieren kann. Möglich wäre auch eine bi-axiale Ausführung. Sendestrahl 16 und Empfangslicht 24 sind dann im Wesentlichen parallel zueinander mit einem geringen Abstand in Richtung der Drehachse des Polygonspiegelrades 20.

Ein von dem Lichtempfänger erzeugtes Empfangssignal wird an eine Auswertungseinheit 30 übergeben. Dort wird beispielsweise erkannt, ob überhaupt ein Objekt angetastet wurde, oder vorzugsweise mit einem Lichtlaufzeitverfahren dessen Abstand ermittelt.

Das Polygonspiegelrad 20 ist eine drehbare Spiegeleinheit mit mehreren Spiegelfacetten 32 an seinem Außenumfang. Die Anzahl der Spiegelfacetten 32 korrespondiert mit dem Scanwinkelbereich, der umso größer ist, je weniger Spiegelfacetten 32 vorgesehen sind. Demnach ist die Anzahl von acht Spiegelfacetten 32 keineswegs festgelegt, sondern es können ebenso mehr oder weniger Spiegelfacetten 32 vorgesehen sein. Die Grundfläche muss auch kein regelmäßiges Vieleck sein, sondern es ist prinzipiell auch möglich, Spiegelfacetten 32 unterschiedlicher Länge vorzusehen. Obwohl in der Draufsicht der Figur 1 nicht erkennbar, sind die Spiegelfacetten 32 gegeneinander verkippt. Damit ist nicht die durch die Natur des Polygons vorgegebene Verkippung in horizontaler Richtung gemeint, sondern eine zusätzliche individuelle Verkippung in vertikaler Richtung. Die Flächen der Spiegelfacetten 32 sind also nicht parallel zur Mittenachse des Polygonspiegelrads 20 ausgerichtet, welche in der gezeigten Ausführungsform zugleich die Drehachse bildet, sondern dagegen individuell um zumindest einige Grad verkippt. Je nach horizontaler Neigung der jeweils von dem Lichtstrahl 16 des Lichtsenders 12 getroffenen Spiegelfacette 32 wird daher eine andere Ebene über einen der horizontalen Ausdehnung der Spiegelfacette 32 entsprechenden Winkelbereich abgetastet, und so entsteht der Mehrebenenscan. Die jeweilige Neigung der Spiegelfacetten ist vorzugsweise individuell, aber auch mehrere Spiegelfacetten 32 gleicher Neigung sind vorstellbar, dann wird die entsprechende Ebene je Umdrehung des Polygonspiegelrads 20 mehrfach abgetastet.

Die Auswertungseinheit 30 kennt die jeweilige Drehstellung des Polygonspiegelrads 20 beispielsweise über einen Encoder, der in Figur 1 ebenso wie der Antrieb für die Rotation nicht gezeigt und an sich bekannt ist. Die Drehstellung des Polygonspiegelrads 20 enthält nicht nur direkt die Information über den horizontalen Winkel, sondern indirekt auch über den vertikalen Winkel, wenn die Neigungen der Spiegelfacetten 32 gespeichert werden. Zusammen mit einem über ein Lichtlaufzeitverfahren gemessenen Abstand werden deshalb Objektpositionen oder Objektkonturen in dreidimensionalen Kugelkoordinaten erfassbar.

Wie einleitend unter Bezugnahme auf die Figur 6 erläutert, erzeugt nur eine Spiegelfacette 32 ohne vertikale Neigung (Tilt = 0°) eine echte Abtastebene, die unabhängig von ihrer tatsächlichen Lage als mittlere oder horizontale Ebene bezeichnet wird. Die anderen Ebenen sind streng genommen im geometrischen Sinne trotz ihrer hier gewählten Bezeichnung keine Ebenen.

Um die Asymmetrie gemäß Figur 6 zu kompensieren, ist in der Ausführungsform nach Figur 1 eine mit der Drehbewegung des Polygonspiegelrads 20 synchronisierte Änderung des Messwinkels durch Relativbewegung zwischen dem Lichtsender 12 und der Sendeoptik 14 durch ein erstes Verschiebungselement 34 sowie zwischen dem Lichtempfänger 28 und der Empfangsoptik 26 durch ein zweites Verschiebungselement 36 vorgesehen. In einer alternativen Ausführungsform kann das erste Verschiebungselement 34 oder das zweite Verschiebungselement 36 weggelassen werden. Die Verschiebung bewirkt bei Synchronisation mit der Drehbewegung des Polygonspiegelrads 20 und einer jeweiligen angepassten Amplitude der Verschiebung, welche die Asymmetrie ausgleicht, dass der Lichtstrahl 16 beziehungsweise der reflektierte Lichtstrahl 24 an der Spiegelfacette 32 unabhängig von der Drehstellung mit einem konstanten vertikalen Winkel reflektiert wird.

Wie durch Pfeile angedeutet, kann das erste Verschiebungselement 34 auf den Lichtsender 12, die Sendeoptik 14 oder beide und entsprechend das zweite Verschiebungselement 36 auf den Lichtempfänger 28, die Empfangsoptik 26 oder beide wirken, da es nur auf die jeweilige Relativbewegung ankommt. Eine Verschiebung nur der Sendeoptik 14 beziehungsweise der Empfangsoptik 26 hat den Vorteil, dass keine flexible elektrische Verbindung notwendig ist.

Der Grundaufbau des Mehrebenenscanners 10 gemäß Figur 1 ist nur beispielhaft zu verstehen. So können etwa Sende- und Empfangspfad auch anders getrennt werden als durch die dargestellte gekreuzte Anordnung mit fixer Ablenkeinheit 18, oder das Polygonspiegelrad 20 kann gegenüber Sende- und Empfangspfad anders angeordnet und orientiert werden.

Figur 2 zeigt eine Teilansicht nur des Polygonspiegelrads 20 einer weiteren Ausführungsform eines Mehrebenenscanners 10, um eine Variation einer dynamischen, mit der Drehbewegung des Polygonspiegelrads 20 synchronisierten Ausgleichsbewegung zu illustrieren. In dieser Ausführungsform erfolgt eine Ausgleichsbewegung durch Winkelverstellung der jeweils von dem Lichtstrahl 16 überstrichenen Spiegelfacette 32 mit Hilfe eines Verkippungselements 38. Die Ausgleichsbewegung sorgt dafür, dass der Lichtstrahl 16 beziehungsweise der reflektierte Lichtstrahl 24 mit einem konstanten vertikalen Winkel umgelenkt werden.

Als Verschiebungselemente 34, 36 beziehungsweise Verkippungselement 38 kommen elektrisch ansteuerbare Aktoren mit Elektromagneten oder Piezoelementen ebenso in Betracht wie mechanische Lösungen, beispielsweise eine Kurvenscheibe, welche die Verkippung einer Spiegelfacette 32 oder des Polygonspiegelrads 20 als Ganzes einschließlich der Spiegelfacette 32 mechanisch an die Rotation des Polygonspiegelrads 20 koppeln und so synchronisieren.

Alternativ oder zusätzlich zu anhand der Figuren 1 und 2 beschriebenen dynamischen Maßnahmen zum Ausgleich von Asymmetrien der mehreren Ebenen, bei denen also optische Elemente 12, 14, 26, 28, 32 synchron zu der Drehbewegung des Polygonspiegelrads 20 bewegt werden, sind auch ausgleichende Konturen auf optisch aktiven Flächen im Strahlengang des Lichtstrahls 16 beziehungsweise reflektierten Lichtstrahls 24 denkbar.

Eine solche Möglichkeit besteht darin, die Spiegelfacetten 32 nicht als plane Fläche, sondern als Freiformflächen auszugestalten. Da die Spiegelfacetten 32 exzentrisch zu der Drehachse des Polygonspiegelrads 20 liegen, überstreicht der Lichtstrahl 16 im Verlauf der Drehbewegung die jeweilige Spiegelfacette 32 in einer Scanlinie mit im Wesentlichen horizontaler Richtung. Wird nun die Spiegelfacette 32 so geformt, dass an jedem Auftreffpunkt des Lichtstrahls 16 der Scanlinie die Anstellfläche einen geringfügig angepassten Winkel aufweist, so kann das vertikale Winkeloffset konstant gehalten werden. Zu beachten ist bei dieser Ausführungsform allerdings, dass der Querschnitt des Lichtstrahls 16 in der Realität nicht punktförmig ist, sondern eine endliche Ausdehnung aufweist. Das limitiert die Gestaltungsfreiheit für die Spiegelfacetten 32, da der Strahlquerschnitt beziehungsweise die Lichtfleckgeometrie nachteilig beeinflusst werden kann. Die Kompensation gelingt daher besonders gut für kleine Strahlquerschnitte und kleine Scanwinkelbereiche, in denen die Abweichungen vergleichsweise gering bleiben.

Eine andere Möglichkeit ist, die ausgleichende Kontur in einer Frontscheibe 40 des Mehrebenenscanners 10 vorzusehen. Die Frontscheibe 40 schließt, wie in Figur 1 dargestellt, ein Gehäuse 42 frontseitig ab und ist für den Lichtstrahl 16, 24 transparent. Aufgrund der jeweiligen vertikalen Neigung der Spiegelfacetten 32 tritt der Lichtstrahl 16, 24 für jede der mehreren abgetasteten Ebenen des Überwachungsbereichs 22 in unterschiedlicher Höhe durch die Frontscheibe 40.

Deshalb kann, wie in Figur 3 in einer Frontalansicht der Frontscheibe 40 gezeigt, eine Aufteilung in mehrere horizontale Segmente 44 erfolgen, von denen jeweils ein Segment 44 einer Spiegelfacette 32 mit deren jeweiliger vertikaler Neigung entspricht. Durch Formung der Segmente 44 kann eine Lichtbrechung erreicht werden, welche die Asymmetrie für die zugehörige Neigung der Spiegelfacette 32 ausgleicht. Zumindest als erster Ansatz eignen sich dafür Keil- beziehungsweise prismenförmige Segmente 44, wobei der Prismenwinkel je nach Neigung der zugehörigen Spiegelfacette 32 gewählt ist. Eine zusätzliche Konturierung ist denkbar. Zu beachten ist allerdings, dass die Lichtwege zu unterschiedlichen Spiegelfacetten 32 bereits an der Frontscheibe 40 ausreichend voneinander separiert sein müssen, um unterschiedliche Segmente 44 zu treffen, was unter anderem von dem Abstand zwischen Polygonspiegelrad 20 und Frontscheibe 40 und dem Spotdurchmesser des Lichtstrahls 16, 24 abhängt. Gerade bei geringen vertikalen Winkelunterschieden zwischen den mehreren abgetasteten Ebenen kann diese Trennung an der Frontscheibe 40 noch unvollständig sein.

Figur 4 zeigt nochmals ein Polygonspiegelrad 20 und eine Frontscheibe 40 in einer weiteren Ausführungsform. Die Frontscheibe 40 weist hier eine zylindrische oder konkave Kontur 46 in horizontaler Richtung auf, wobei im Falle einer in Segmente 44 unterteilten Frontscheibe 40 jedes der Segmente 44 eine solche konkave Kontur 46 haben kann.

Die konkave Kontur 46 führt dazu, dass der zu einer Spiegelfacette 32 gehörige Scanwinkelbereich aufgeweitet oder vergrößert wird. Die Frontscheibe 40 übernimmt also einen Teil der Ablenkung für die Abtastung. Der Vorteil hiervon ist, dass der zu kompensierende Effekt asymmetrischer Abtastebenen von Anfang an kleiner bleibt. Denn Ursache für die Asymmetrien sind die im Verlauf der Drehbewegung einer Spiegelfacette 32 zunehmend steileren Einfallswinkel auf die Spiegelfacette 32. Der Schwankungsbereich und damit der negative Effekt wird deshalb bei in horizontaler Richtung kleinen Spiegelfacetten 32 reduziert.

Figur 5 zeigt den durch die erfindungsgemäße Kompensation erreichten vertikalen Offset in Abhängigkeit von der Drehstellung des Polygonspiegelrads 20. Konkret dargestellt sind Scanlinien auf einer planen Wand, die senkrecht zu der optischen Achse des nicht vertikal verkippten Lichtstrahls 16 steht (Tilt=0). Die hier perfekte Symmetrie ist im Vergleich zu Figur 6 klar erkennbar, wobei auch ein nur teilweises Erreichen der Symmetrie bereits eine Verbesserung darstellen würde. Auch in der symmetrischen Abhängigkeit bleibt es dabei, dass nur die mittlere Scanlinie (Tilt=0) gerade und damit die zugehörige Ebene eine plane Ebene ist. Die übrigen Scanlinien sind gekrümmt, was aus einfachen geometrischen Überlegungen so sein muss, wenn der abtastende Lichtstrahl 16 von einem nahezu punktförmigem Projektionszentrum eine plane Wand durchdringt, analog zu einer Weltkarte, in der die Geodätischen der Längs- und Breitengrade zu Bögen werden. Die vertikale Winkelauflösung oder der Winkelabstand zwischen zwei Ebenen, welche die für den Mehrebenenscanner 10 maßgebliche Größe darstellt, bleibt dabei wie gewünscht konstant. Es gelingt demnach durch die beschriebenen Kompensationsmaßnahmen, einen Mehrebenenscanner 10 mit konstanter statt asymmetrisch variierender Auflösung zu realisieren.

Abschließend sei noch erwähnt, dass die anhand der Figuren 1 bis 4 einzeln erläuterten Kompensationsmaßnahmen in beliebiger Weise miteinander kombiniert werden können, wie in den Ansprüchen definiert.

## Patentansprüche

1. Mehrebenenscanner (10) mit einem Lichtsender (12) zum Aussenden eines Lichtstrahls (16) in einen Überwachungsbereich (22), mit einem Lichtempfänger (28) zum Empfangen des von Objekten in dem Überwachungsbereich (22) reflektierten Lichtstrahls (24), mit einer Auswertungseinheit (30) zum Auswerten eines Empfangssignals des Lichtempfängers (28) und mit einer als Polygonspiegelrad ausgebildeten drehbaren Spiegeleinheit (20) zur periodischen Ablenkung des Lichtstrahls (16, 24), die mehrere ringförmig und gegeneinander verkippt angeordnete Spiegelfacetten (32) aufweist, um so als Überwachungsbereich (22) je Umdrehung der Spiegeleinheit (20) einen Winkelausschnitt mehrfach in unterschiedlicher Höhe abzutasten, also mehrere übereinanderliegende Ebenen,
**dadurch gekennzeichnet,**
**dass** zum Ausgleich von Verzerrungen der mehreren abgetasteten Ebenen, die durch den unterschiedlichen Einfallswinkel des Lichtstrahls (16) auf die Spiegelfacetten (32) im Verlauf einer Drehbewegung verursacht werden, optische Elemente (12, 14, 26, 28, 32, 40) im Strahlengang des Lichtstrahls (16, 24) eine ausgleichende Kontur aufweisen, indem die Spiegelfacetten (32) als Freiformflächen mit ausgleichender Kontur ausgebildet sind oder indem der Mehrebenenscanner (10) eine Frontscheibe (40) umfasst, die mehrere den Ebenen entsprechende übereinander liegende Segmente (44) mit ausgleichender Kontur aufweist, und/oder ein Verschiebungselement (36) vorgesehen ist, um den Lichtempfänger (28) gegenüber einer dem Lichtempfänger (28) vorgeordneten Empfangsoptik (26) mit der Drehbewegung der Spiegeleinheit (20) synchronisiert zu verschieben.

2. Mehrebenenscanner (10) nach einem der vorhergehenden Ansprüche,
wobei die Spiegelfacetten (32) ein Verkippungselement (38) aufweisen, um mit der Drehbewegung der Spiegeleinheit (20) synchronisiert verkippt zu werden.

3. Mehrebenenscanner (10) nach einem der vorhergehenden Ansprüche,
wobei ein weiteres Verschiebungselement (34) vorgesehen ist, um den Lichtsender (12) gegenüber einer dem Lichtsender (12) vorgeordneten Sendeoptik (14) mit der Drehbewegung der Spiegeleinheit (20) synchronisiert zu verschieben.

4. Mehrebenenscanner (10) nach einem der vorhergehenden Ansprüche,
wobei das Verschiebungselement (36) und/oder das weitere Verschiebungselement (34) einen Elektromagnet, ein Piezoelement oder eine Kurvenscheibe aufweist .

5. Mehrebenenscanner (10) nach Anspruch 2,
wobei das Verkippungselement (38) einen Elektromagnet, ein Piezoelement oder eine Kurvenscheibe aufweist.

6. Mehrebenenscanner (10) nach einem der vorhergehenden Ansprüche,
wobei eine Frontscheibe (40) des Mehrebenenscanners (10) eine konkave Krümmung aufweist.

7. Verfahren zum Erfassen von Objekten in einem Überwachungsbereich (22), der von einem Winkelausschnitt mehrerer übereinanderliegender Ebenen gebildet wird, bei dem ein Lichtstrahl (16) ausgesandt, nach Reflexion an einem Objekt in dem Überwachungsbereich (22) wieder empfangen und ausgewertet wird, wobei der Überwachungsbereich (22) zyklisch abgetastet wird, indem der Lichtstrahl (16) an einer als Polygonspiegelrad ausgebildeten rotierenden Spiegeleinheit (20) mit mehreren ringförmig und gegeneinander verkippt angeordneten Spiegelfacetten (32) abgelenkt wird, um so als Überwachungsbereich (22) je Umdrehung der Spiegeleinheit (20) einen Winkelausschnitt mehrfach in unterschiedlicher Höhe abzutasten, also mehrere übereinanderliegende Ebenen, **dadurch gekennzeichnet,**
**dass** der Ablenkwinkel an einer Spiegelfacette (32) zum Ausgleich von Verzerrungen der mehreren abgetasteten Ebenen, die durch den unterschiedlichen Einfallswinkel des Lichtstrahls (16) auf die Spiegelfacetten (32) im Verlauf einer Drehbewegung verursacht werden, dadurch konstant gehalten wird, dass optische Elemente (12, 14, 26, 28, 32, 40) im Strahlengang des Lichtstrahls (16, 24) eine ausgleichende Kontur aufweisen, indem die Spiegelfacetten (32) als Freiformflächen mit ausgleichender Kontur ausgebildet sind oder indem eine Frontscheibe (40) mehrere den Ebenen entsprechende übereinander liegende Segmente (44) mit ausgleichender Kontur aufweist, und/oder der Lichtempfänger (28) gegenüber einer dem Lichtempfänger (28) vorgeordneten Empfangsoptik (26) synchronisiert verschoben wird, um eine mit der Drehbewegung der Spiegeleinheit (20) synchronisierte Ausgleichsbewegung auszuführen.

8. Verfahren nach Anspruch 7,
wobei mit der Drehbewegung der Spiegeleinheit (20) synchronisiert die Spiegelfacetten (32) verkippt werden oder der Lichtsender (12) gegenüber einer dem Lichtsender (12) vorgeordneten Sendeoptik (14) synchronisiert verschoben wird.

## Claims

1. A multi-layer scanner (10) having a light transmitter (12) for transmitting a light beam (16) into a monitoring area (22), a light receiver (28) for receiving the light beam (24) reflected by objects in the monitoring area (22), an evaluation unit (30) for evaluating a received signal of the light receiver (28), and a rotatable mirror unit (20) configured as a polygon mirror wheel for periodically deflecting the light beam (16, 24), which has a plurality of mirror facets (32) arranged in a ring and tilted with respect to one another, in order thus to scan, as a monitoring region (22), an angular section a plurality of times at different heights per revolution of the mirror unit (20), i.e. a plurality of layers arranged one above the other,
**characterized in that**, in order to compensate for distortions of the plurality of scanned layers that are caused by the different angle of incidence of the light beam (16) on the mirror facets (32) in the course of a rotational movement, optical elements (12, 14, 26, 28, 32, 40) in the beam path of the light beam (16, 24) have a compensating contour, **in that** the mirror facets (32) are configured as free-form surfaces with a compensating contour, or **in that** the multi-layer scanner (10) comprises a front window (40) having a plurality of segments (44) arranged one above the other corresponding to the layers and having a compensating contour, and/or a displacement element (36) is provided in order to displace the light receiver (28) with respect to receiving optics (26) arranged in front of the light receiver (28) in synchrony with the rotational movement of the mirror unit (20).

2. The multi-layer scanner (10) according to any of the preceding claims,
wherein the mirror facets (32) comprise a tilting member (38) to be tilted in synchrony with the rotational movement of the mirror unit (20).

3. The multi-layer scanner (10) according to any of the preceding claims,
wherein a further displacement element (34) is provided for displacing the light transmitter (12) relative to transmission optics (14) arranged in front of the light transmitter (12) in synchrony with the rotational movement of the mirror unit (20).

4. The multi-layer scanner (10) according to any of the preceding claims,
wherein the displacement element (36) and/or the further displacement element (34) comprises an electromagnet, a piezoelectric element, or a cam .

5. The multi-layer scanner (10) according to claim 2,
wherein the tilting element (38) comprises an electromagnet, a piezoelectric element, or a cam.

6. The multi-layer scanner (10) according to any of the preceding claims,
wherein a front window (40) of the multi-layer scanner (10) has a concave curvature.

7. A method for detecting objects in a monitoring region (22) that is formed by an angular section of a plurality of layers arranged one above the other, wherein a light beam (16) is transmitted, is received again after reflection at an object in the monitoring region (22) and is evaluated, the monitoring region (22) being scanned cyclically in that the light beam (16) is deflected at a rotating mirror unit (20), which is configured as a polygon mirror wheel having a plurality of mirror facets (32) arranged in a ring and tilted with respect to one another, in order thus to scan, as a monitoring region (22), an angular section a plurality of times at different heights per revolution of the mirror unit (20), i.e. a plurality of layers arranged one above the other,
**characterized in that** the deflection angle at a mirror facet (32), in order to compensate for distortions of the plurality of scanned layers that are caused by the different angle of incidence of the light beam (16) on the mirror facets (32) in the course of a rotational movement, is kept constant **in that** optical elements (12, 14, 26, 28, 32, 40) in the beam path of the light beam (16, 24) have a compensating contour, **in that** the mirror facets (32) are configured as free-form surfaces having a compensating contour, or **in that** a front window (40) has a plurality of segments (44) arranged one above the other corresponding to the layers and having a compensating contour, and/or the light receiver (28) is displaced with respect to receiving optics (26) arranged in front of the light receiver (28) in a synchronized manner in order to perform a compensating movement in synchrony with the rotary movement of the mirror unit (20).

8. The method according to claim 7,
wherein the mirror facets (32) are tilted in synchrony with the rotational movement of the mirror unit (20), or wherein the light transmitter (12) is displaced in synchrony with respect to transmission optics (14) arranged in front of the light transmitter (12).

## Revendications

1. Scanner multi-plans (10) comportant un émetteur de lumière (12) pour émettre un faisceau lumineux (16) dans une zone à surveiller (22), un récepteur de lumière (28) pour recevoir le faisceau lumineux (24) réfléchi par des objets dans la zone à surveiller (22), une unité d'évaluation (30) pour évaluer un signal de réception du récepteur de lumière (28), et une unité de miroir rotative (20) réalisée sous forme de roue à miroir polygonal, destinée à dévier périodiquement le faisceau lumineux (16, 24) et présentant plusieurs facettes de miroir (32) disposées en forme d'anneau et inclinées les unes par rapport aux autres, afin de balayer ainsi une section angulaire plusieurs fois, à différentes hauteurs, par tour de l'unité de miroir (20), c'est-à-dire plusieurs plans superposés, en tant que zone à surveiller (22), **caractérisé en ce que**
pour compenser les distorsions desdits plusieurs plans balayés, qui sont causées par l'angle d'incidence différent du faisceau lumineux (16) sur les facettes de miroir (32) au cours d'un mouvement de rotation, des éléments optiques (12, 14, 26, 28, 32, 40) dans le chemin optique du faisceau lumineux (16, 24) présentent un contour de compensation du fait que les facettes de miroir (32) sont réalisées sous forme de surfaces de forme libre à contour de compensation ou du fait que le scanner multi-plans (10) comprend une vitre frontale (40) présentant plusieurs segments (44) à contour de compensation qui sont superposés et qui correspondent auxdits plans, et/ou il est prévu un élément de déplacement (36) pour déplacer le récepteur de lumière (28) en synchronisation avec le mouvement de rotation de l'unité de miroir (20) par rapport à une optique de réception (26) disposée en amont du récepteur de lumière (28).

2. Scanner multi-plans (10) selon la revendication précédente,
dans lequel les facettes de miroir (32) comprennent un élément d'inclinaison (38) pour être inclinées en synchronisation avec le mouvement de rotation de l'unité de miroir (20).

3. Scanner multi-plans (10) selon l'une des revendications précédentes,
dans lequel est prévu un autre élément de déplacement (34) pour déplacer l'émetteur de lumière (12) en synchronisation avec le mouvement de rotation de l'unité de miroir (20) par rapport à une optique d'émission (14) disposée en amont de l'émetteur de lumière (12).

4. Scanner multi-plans (10) selon l'une des revendications précédentes,
dans lequel l'élément de déplacement (36) et/ou l'autre élément de déplacement (34) comprend un électroaimant, un élément piézoélectrique ou une came de commande.

5. Scanner multi-plans (10) selon la revendication 2,
dans lequel l'élément d'inclinaison (38) comprend un électroaimant, un élément piézoélectrique ou une came de commande.

6. Scanner multi-plans (10) selon l'une des revendications précédentes,
dans lequel une vitre frontale (40) du scanner multi-plans (10) présente une courbure concave.

7. Procédé de détection d'objets dans une zone à surveiller (22) qui est formée par une section angulaire de plusieurs plans superposés, dans lequel un faisceau lumineux (16) est émis, est reçu après réflexion sur un objet dans la zone à surveiller (22) et est évalué, la zone à surveiller (22) étant balayée de manière cyclique du fait que le faisceau lumineux (16) est dévié sur une unité de miroir rotative (20) réalisée sous forme de roue à miroir polygonal et ayant plusieurs facettes de miroir (32) disposées en forme d'anneau et inclinées les unes par rapport aux autres, afin de balayer ainsi une section angulaire plusieurs fois, à différentes hauteurs, par tour de l'unité de miroir (20), c'est-à-dire plusieurs plans superposés, en tant que zone à surveiller (22),
**caractérisé en ce que**
pour compenser les distorsions desdits plusieurs plans balayés, qui sont causées par l'angle d'incidence différent du faisceau lumineux (16) sur les facettes de miroir (32) au cours d'un mouvement de rotation, l'angle de déviation sur une facette de miroir (32) est maintenu constant du fait que des éléments optiques (12, 14, 26, 28, 32, 40) dans le chemin optique du faisceau lumineux (16, 24) présentent un contour de compensation, du fait que les facettes de miroir (32) sont réalisées sous forme de surfaces de forme libre à contour de compensation ou du fait qu'une vitre frontale (40) présente plusieurs segments (44) à contour de compensation qui sont superposés et qui correspondent auxdits plans, et/ou le récepteur de lumière (28) est déplacé en synchronisation par rapport à une optique de réception (26) disposée en amont du récepteur de lumière (28), afin d'effectuer un mouvement de compensation synchronisé avec le mouvement de rotation de l'unité de miroir (20).

8. Procédé selon la revendication 7,
dans lequel les facettes de miroir (32) sont inclinées en synchronisation avec le mouvement de rotation de l'unité de miroir (20), ou l'émetteur de lumière (12) est déplacé en synchronisation par rapport à une optique d'émission (14) disposée en amont de l'émetteur de lumière (12).
